(19) Europäisches Patentamt European Patent Office Office européen des brevets

(11) **EP 4 617 640 A1**

(12) **EUROPEAN PATENT APPLICATION**

(43) Date of publication:
**17.09.2025 Bulletin 2025/38**

(21) Application number: **24163074.8**

(22) Date of filing: **12.03.2024**

(51) International Patent Classification (IPC):
*G01N 21/03* (2006.01)   *G01N 21/3563* (2014.01)
*G01N 31/10* (2006.01)   *G01J 3/02* (2006.01)
*B01J 8/00* (2006.01)   *G01N 21/15* (2006.01)
*G01N 21/35* (2014.01)   *G01N 21/47* (2006.01)

(52) Cooperative Patent Classification (CPC):
**G01N 21/3563; B01J 8/001; G01J 3/021;**
**G01J 3/0286; G01J 3/0291; G01N 21/0332;**
G01N 21/4738; G01N 31/10; G01N 2021/0325;
G01N 2021/0335; G01N 2021/158;
G01N 2021/3595; G01N 2021/4761;
G01N 2201/0637; G01N 2201/1211;   (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Reacnostics GmbH**
**20457 Hamburg (DE)**

(72) Inventors:
• HORN, Raimund
  20457 Hamburg (DE)
• KORUP, Oliver
  20457 Hamburg (DE)
• SCHAUBE, Maximilian
  20457 Hamburg (DE)

(74) Representative: **Eisenführ Speiser**
**Patentanwälte Rechtsanwälte PartGmbB**
**Johannes-Brahms-Platz 1**
**20355 Hamburg (DE)**

(54) **OPTICAL ARRANGEMENT FOR PRECISE AND REPRODUCIBLE INTERCHANGE OF TWO MEASUREMENT CHAMBERS FOR DRIFT SPECTROSCOPY**

(57)    An assembly for studying a sample comprising: a base plate assembly (100), an optical unit (200) comprising a cooling plate (203), an entrance and exit flat mirror (903, 904), an entrance ellipsoidal mirror (901), an exit ellipsoidal mirror (902), and a focussing lens (905) configured to bundle the rays received from the exit flat mirror (904), wherein ellipsoidal mirror mounts (206, 207) are connected to the cooling plate (203), the assembly further comprising a chamber plate (300) having two spectroscopy chambers (400), wherein the chamber plate (300) is connected to the base plate assembly (100) via a rotary stroke actuator (500), wherein the rotary stroke actuator (500) is configured to move the chambers (400) horizontally and rotate the chambers (400) vertically into the beam path under the optical unit (200), wherein the chamber plate (300) comprises a cooling channel (305) and two ports (302), wherein the first port is connected to an inlet of the cooling channel (305) and the second port is connected to an outlet of the cooling channel (305).

Fig. 9

EP 4 617 640 A1

(52) Cooperative Patent Classification (CPC): (Cont.)
G01N 2201/1286

**Description**

The present invention relates to an optical assembly for a measuring cell for studying samples by means of electromagnetic radiation, in particular a measuring cell for iso-potential spectroscopy, and more preferably a measuring cell for DRIFT spectroscopy in the context of iso-potential spectroscopy. The present invention also relates to a method for determining a surface concentration of an adsorbate adsorbed from a sample gas onto a solid catalyst.

The study of heterogeneously catalyzed reactions is of great scientific and economic importance. However, solid catalysts are dynamic systems that change their structure and reactivity in interaction with their chemical environment. To create structure-activity relationships for such systems, the field of operando investigation of catalytic reactions has continuously developed further in recent times. The goal is always the spectroscopic determination of catalytic activities and states under reaction conditions actually occurring in practice. However, there is a conflict of goals here, since spectroscopic methods such as UV, EPR, IR, NMR, XRD etc. require a special operando measuring cell, which is transmissive, for example, to the electromagnetic radiation applied. In contrast, the reactors used in industrial production for, for example, heterogeneously catalyzed reactions generally consist of steel, which is not transmissive to such radiation.

To solve this problem, so-called iso-potential spectroscopy has been developed and refined, the fundamental approach of which is to simulate the reactions running in an industrial reactor and prevailing chemical-physical reaction conditions in a special measuring cell outside the reactor, wherein this measuring cell is suitable for carrying out the desired study method.

Reference is made in particular to WO 2021/ 078817 A1 and the prior art set forth therein and to DE 199 10 291 A1 with respect to the prior art relevant in this context.

WO 2021/078817 describes the use of iso-potential spectroscopy in operando studies of catalytic reactions and a device suitable for this purpose, which includes a reactor for actually carrying out the desired reaction in a larger or industrial scale, which is equipped with a sampling device for gases or liquids from the reactor chamber. Liquid or gaseous samples can be taken along the catalyst bed with simultaneous temperature determination at the sampling location. These samples are transferred via a connecting line into an external measuring cell, which contains the same catalyst as the production reactor and has the same temperature in the measuring chamber. The pressure drop in the connecting line is kept to a minimum such that the pressure in the measuring cell matches as closely as possible the pressure in the reactor. The same chemical environment or the same chemical reaction potential therefore prevails in the measuring cell as in the actual reactor and it is presumed that the same reaction processes are then present in reactor and measuring cell.

Since the heterogeneously catalyzed reactions run or are catalyzed on the catalyst surface, the determination of the surface occupancy of the catalyst is of decisive importance to understand, influence, and therefore also improve the reaction process.

Using the optical assembly for a measuring cell according to the invention, various spectroscopic studies, such as IR spectroscopy or DRIFTS, can be carried out to study such heterogeneously catalyzed reactions. The so-called DRIFTS method (diffuse reflection infrared Fourier transform spectroscopy) has proven to be particularly suitable and preferred according to the invention in this case. For a fundamental introduction to this method, see E. H. Korte in Analytiker-Taschenbuch, Springer-Verlag, Berlin 1990, volume 9, pages 91-123.

Measuring cells for DRIFT spectroscopy and Fourier transform IR spectrometer (FTIR spectrometer) in general form, as well as measuring accessories for DRIFT spectroscopy, have been well known and commercially available for some time. Such measuring accessories or measuring cells in particular comprise an optical unit or optical assembly, with which incident infrared light can be bundled onto a sample located in its focus, on the one hand, and diffusely scattered infrared light can be collected thereby in the largest possible solid angle range and can be bundled onto a detector or returned back into the spectrometer beam path, on the other hand. This optical unit or optical assembly is usually designed as a mirror system. DRIFT spectroscopy is primarily used for qualitative studies. In contrast, if one wishes to obtain quantitative results, a transformation of the spectrum of the diffuse reflection has to be performed with the aid of the Kubelka-Munk equation.

These commercially available measuring cells have various disadvantages, however, and in particular are not especially suitable and equipped for the described iso-potential spectroscopy. Thus, for example, only the sample crucible of such a measuring cell is heated, so that the various substances located in the measuring cell (both educts and products) can condense on the spectral windows and make a measurement significantly more difficult. The cells sometimes have a very large dead volume, which promotes the occurrence of undesired bypass flows. The educts can come into contact with hot metal parts (for example with the heating cartridges used), due to which the recorded spectra have high background contributions, which make an evaluation significantly more difficult or make an evaluation in combination with the profile measurement impossible, because the same chemical potential is no longer provided. The circumstance that usually only one or at most two sample crucibles can be measured under the same process conditions is particularly disadvantageous, due to which a complete analysis of the recorded spectra according to the Kubelka-Munk method is not possible (subtraction of various recorded spectra to reach the desired spectrum without background contributions).

The quantification of IR spectra in diffuse reflection takes place by means of the Kubelka-Munk equation and is based on a comparison of the detected radiation intensity to that of a reference substance. This is necessary since the band intensity and also the background spectrum are influenced, inter alia, by the measuring conditions, such as the composition of the sample chamber gaseous atmosphere and the atmosphere in the beam path in general (e.g. content of carbon dioxide and water) and the sample preparation. In addition, the location of the baseline is dependent on the temperature and pressure (due to changed scattering coefficients) (Appl. Spectrosc. Rev. 2002, 37, 347-364, doi:10.1081/ASR-120016081). It is therefore necessary to record sample spectrum and reference spectrum under exactly identical conditions, i.e., in direct succession. This significantly restricts the conduct of kinetic studies in cells having only one sample container and the evaluation thereof (ACS Publications, 1993, pp. 351-375).

The object of the present invention was therefore to provide an assembly for a measuring cell improved in various aspects for studying samples using spectroscopic methods or using electromagnetic radiation. In particular, the object was to provide an (optical) assembly with two sample crucibles or chambers that allows to perform DRIFT spectroscopy measurements required to apply the Kubelka-Munk equation with a stability that allows to perform the measurements sequentially.

This object is achieved by an optical assembly for a measuring cell as claimed in claim 1 and its special embodiments according to the corresponding dependent claims.

In a preferred embodiment, the assembly for studying a sample by means of electromagnetic radiation comprises a base plate assembly, an optical unit comprising a cooling plate, two base mounts, an entrance flat mirror, an entrance ellipsoidal mirror, exit ellipsoidal mirror and an exit flat mirror and a focussing lens configured to bundle the rays received form the exit flat mirror, wherein the entrance and exit ellipsoidal mirrors are connected to ellipsoidal mirror mounts which are connected to the cooling plate, wherein the cooling plate contains a cooling channel and two ports, wherein the first port is connected to an inlet of the cooling channel and the second port is connected to an outlet of the cooling channel and wherein the assembly further comprises a chamber plate having two spectroscopy chambers, wherein the spectroscopy chambers are fastened on the chamber plate, wherein each spectroscopy chamber comprises a casing comprising a gas port, a first port for an electrical connection, a second port for an electrical connection, a crucible, a heating element, and a third port, wherein the chamber further comprises a window, wherein the window seals the casing gas tight, wherein the casing and the window define a volume, wherein the crucible and the heating element are within said volume, wherein the sample crucible is provided with a drilled hole connected to the third port of the casing and wherein the chamber plate is connected to the base plate assembly via a rotary stroke actuator, wherein the rotary stroke actuator is configured to move the chambers vertically and rotate the chambers horizontally into the beam path of or defined by the optical unit, wherein the chamber plate comprises a cooling channel and two ports, wherein the first port of the chamber plate is connected to an inlet of the cooling channel and the second port of the chamber plate is connected to an outlet of the cooling channel.

The assembly may be placed in or connected to a spectrometer, for example an FTIR spectrometer, in particular configured for DRIFTS spectroscopy.

The mirrors may be commercially available mirrors. The mirrors may be mounted with mirror mounts on kinematic mounts. The mirror mounts may be cooled via a cooling plate connected to the mirror mounts or the kinetic mounts.

The sample plate allows to move the chambers. In particular, each chamber can be placed into the beam path, in particular the sample inside a chamber may be moved to the common focal point of the two ellipsoidal mirrors.

Alternatively, the first port for an electrical connection and the second port for an electrical connection can be replaced by one single port containing one or more electrical connections.

Heating the crucible directly avoids extensive heat on the chamber casing, in particular on the window sealing the chamber and providing the opening for electromagnetic radiation.

The compact assembly allows to minimize disturbing absorption of electromagnetic radiation, in particular infra-red radiation, for example caused by the gas atmosphere. Absorptions in the beam path, by sample bulk material or adsorbates on the diluent are also minimized due to the compact, thermally stable construction.

The assembly allows measurements from 50°C to 550°C due to the high thermal stability achieved by the cooling means of the optical unit and/or the chamber plate.

The high precision rotary stroke actuator allows for reproducible measurements for all temperatures. Thus, the assembly allows for fast reproducible and accurate measurements at high temperatures. For example, the cooling leads to an increased thermal stability as the temperature changes of the parts of the assembly are minimized. The assembly allows to record spectra, thereby allowing to apply the Kubelka-Munk equation by taking measurements in series. Thus, two chambers suffice to perform the necessary measurements.

The compact assembly, in particular the chamber design and/or the optical beam path design allows to operate the assembly under pressure up to 10 bar. Using monocrystalline $CaF_2$ windows of a thickness of 1 mm to 3 allows to operate the assembly under a pressure of up to 10 bar.

Heating of the chamber, in particular the chamber window, prevents sample gas condensation.

The optimized beam path which utilizes two flat mirrors and two ellipsoidal mirrors achieves effective suppression of specular reflected radiation. The signal intensity is increased by a factor of four with respect to commonly known assemblies. For example, standard commercially available optical components such as mirrors and lenses are utilized, however, the new beam path design uses two mirrors less than conventional designs. The ellipsoidal mirrors have a short focal length which allows to operate the assembly without additional guidance mirrors.

In a preferred embodiment, the rotary stroke actuator comprises a servo motor, which is connected to the top of a stroke actuator, wherein the stroke actuator is connected to the base plate by a spacer and wherein the servo motor is connected to a sliding rail via sledge. In particular, the rotary stroke actuator is connected to the base plate assembly via two connectors. The rotary stroke actuator is connected to the front plate of the base plate assembly via a sledge. A sliding rail on which the sledge slides is mounted on the front plate. The sledge is connected to the rotary stroke actuator and slides on the sliding rail. The rotary stroke actuator is connected to the bottom plate via the spacer and a precision shaft mount of the rotary stroke actuator. The bottom plate of the base plate assembly is sandwiched between the high precision shaft mount and the spacer of the rotary stroke actuator.

In a preferred embodiment, the base plate assembly is made of Aluminium. Aluminium improves the thermal conductivity. Thus, higher operating temperatures can be achieved.

In a preferred embodiment, the base plate assembly comprises a front plate, a bottom plate, a top plate, a plate support and a spectrometer adapter plate. Providing the base plate assembly in modular form allows for easier construction and therefore reduced complexity of the manufacturing process. The spectrometer adapter plate is optional and allows to couple the assembly to different spectrometers.

In a preferred embodiment, the entry and exit flat mirrors are mounted on mirror mounts, wherein the mirror mounts for the entry and exit flat mirrors are connected to the base plate assembly, in particular to the top plate, and in particular wherein the mirror mounts are configured to mount the mirrors on kinematic mounts wherein the kinematic mirror mount is connected to the top plate via an adapter plate. Mounting the mirrors on kinematic mounts allows for precise adjustment of the optical unit. In other words, a kinematic mount is connected to the base plate assembly via an adapter plate. The mirrors are connected to the kinematic mounts via respective mirror mounts that connect the mirrors to the kinematic mounts. The mirror mount and the kinematic mount form a mount for the mirror which allows to adjust the orientation of the respective mirror.

In a preferred embodiment, the base mounts of the optical unit are connected to the base plate assembly with one end, in particular to the top plate of the base plate assembly and wherein the other, adjacent end of the base mounts is connected to the cooling plate, wherein the cooling plate is parallel to the top plate of the base plate assembly. Thus, the base mounts act as structural supports for the cooling plate and the attachments thereto connecting the cooling plate with the base plate assembly.

In a preferred embodiment, the chamber plate is connected to the rotary stroke actuator via a receptacle, wherein the receptacle is an adapter mount.

In a preferred embodiment, a wire is wrapped around the heating element wherein the heating element and the crucible consists of glass ceramic, wherein the heating element comprises a helical groove and the heating wire is wrapped around the heating element in the helical groove, for example the heating wire may be a stainless steel heating wire.

In a preferred embodiment, the heating element is covered by a heat shield from mica/borosilicate glass ceramic with a low thermal conductivity coefficient.

In a preferred embodiment, the window is a $CaF_2$ window, wherein the casing comprises a groove into which an O-ring is placed and wherein a lid presses the window against the O-ring, in particular wherein the lid is out of $Si_3N_4$ and AlN ceramic, wherein the lid comprises heating wires.

In a preferred embodiment, the chamber plate comprises two recesses, wherein each recess is configured to mount one of the chambers.

In a preferred embodiment, the chamber plate further comprises mounts for spacer sleeves, in particular the spectroscopy chambers may be mounted by means of spacer sleeves out of Aluminium mounted on the mounts for the spacer sleeves. Preferably, the spacer sleeves have walls having a thickness of 1 mm. The spacer sleeves may be cylinders having a diameter of 6 mm. The spacer sleeves allow to offset the chambers against the chamber plate allowing to control the amount of heat that is transferred from the chamber to the chamber plate. In other words, the chamber casing may comprise a protrusion that is wider than the recess of the chamber plate. The protrusion prohibits the chamber to move in a direction along the normal direction of the chamber plate. Thus, the protrusion can contact the surface of the chamber plate resulting in that a surface of the protrusion contacts the surface of the chamber plate directly. The spacer sleeves prevent direct contact between the surface of the protrusion and the chamber plate. Thus, heat transfer is reduced.

In a preferred embodiment, the chamber further comprises a thermocouple. The thermocouple may, in particular, extend through the third port of the casing. Preferably, the thermocouple may be placed inside the crucible, for example at the position of sample. Thus, the temperature of the sample can be measured in situ.

In a preferred embodiment, the chamber further comprises a T-piece at the bottom of the casing, wherein the T-piece comprises a first gas port and a second thermocouple port and a third port connected to the volume inside the casing via the third port of the casing. The volume inside the casing being defined by the casing and the window. The T-piece may be a commercially available T-piece. The T-piece allows to provide the electrical connections for a thermocouple by means of one port of the T-piece and a gas inlet or outlet by means of the second port of the T-piece. The electrical connections and the gas inlet or outlet may be provided via a third port of the T-piece towards the chamber. In particular, the gas may flow and the electrical connections may run through the port in the casing and the hole in the crucible, which may be drilled. Therefore, the connections and the gas may be directed towards the inside of the crucible.

In another embodiment the invention relates to a measuring cell for iso-potential drift spectroscopy comprising the optical assembly according to claim 1.

Providing a measuring cell with the optical assembly provides a stable construction for reproducible and fast measurements. Placing the assembly into such cell allows to easily connect and disconnect the cell from a spectrometer.

Brief description of the drawings

Fig. 1 shows an assembly for measuring a sample by means of electromagnetic radiation

Fig. 2 shows the base plate assembly of the assembly

Fig. 3 shows the optical unit of the assembly

Fig. 4 shows the upper part of the optical unit

Fig. 5 shows the chamber plate of the assembly

Fig. 6 shows the chamber of the assembly

Fig. 7 shows the chamber connected to the chamber plate

Fig. 8 shows the rotary stroke actuator

Fig. 9 shows a schematic representation of the beam path

Fig. 10 shows a simulation of the beam path

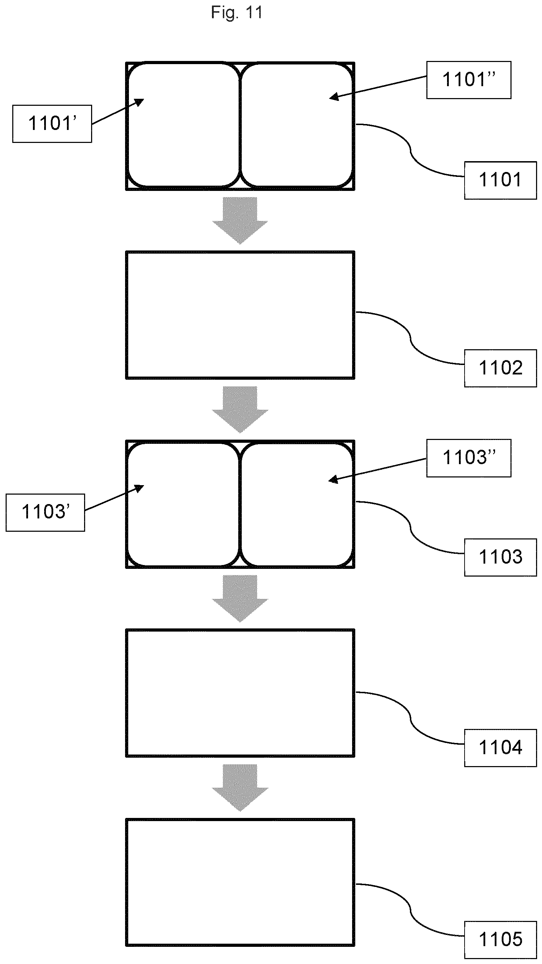

Fig. 11 shows a scheme of the method for determining a surface concentration of an adsorbate

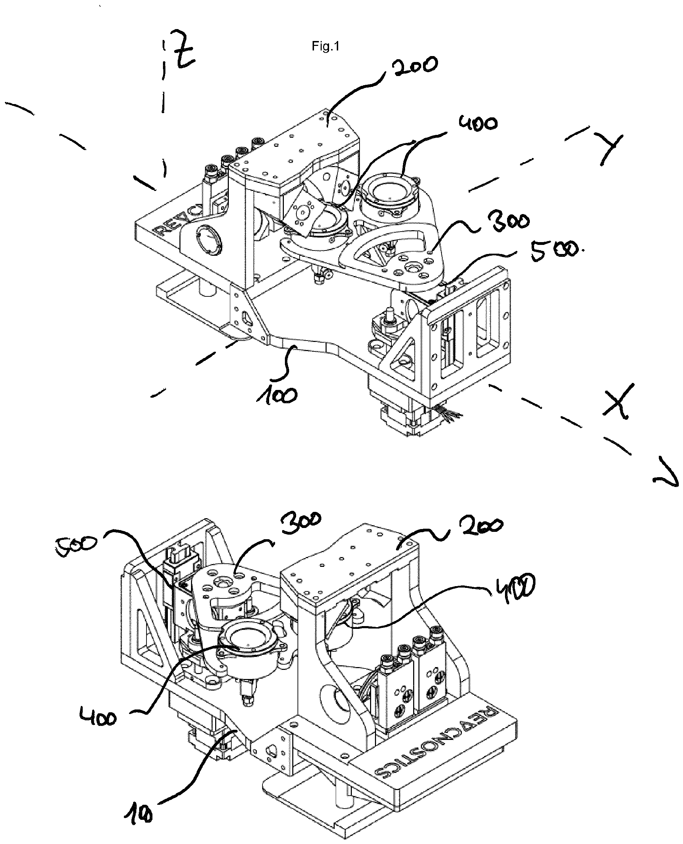

Fig. 1 shows an assembly for studying a sample by means of electromagnetic radiation, for example infra-red radiation. For example, the sample may be studied using a FTIR-spectrometer. For example, the sample may be studied by DRIFTS spectroscopy. The assembly comprises a base plate assembly 100, an optical unit 200, and chamber plate 300, two chambers 400 which may comprise a sample and which may be mounted on the chamber plate 300, and a rotary stroke actuator 500 that can lift and rotate the chambers into the beam path defined by the optical unit by moving the chamber plate holding the samples.

The assembly can be placed directly in the beam path of the IR spectrometer, for example a FTIR spectrometer. The assembly enables automated Diffusive Reflectance Infra-red Fourier Transform Spectroscopy (DRIFTS), for example on solid catalyst samples coupled with accurate background subtraction and reference measurements. The assembly can be used as standalone *operando* spectroscopy assembly for DRIFTS. The assembly can be coupled to a spatial profile reactor for iso-potential DRIFTS. The assembly, therefore, enables the comprehensive investigation of bulk catalysts and surface adsorbates for a large variety of heterogeneous catalytic reactions at industrially relevant temperature and pressure conditions.

The highly stable assembly allows to omit the housing used for conventional assemblies which comprise an inert gas to keep the atmosphere around the cells constant during the entire measurement time. The conventional inert gas atmosphere avoids variations in temperature and water vapor concentration and also the carbon dioxide concentration outside the housing has no influence on resulting IR spectra.

The new assembly allows to perform measurements without an inert gas atmosphere present, since the stability allows to perform precise reference measurements. However, the assembly may also be placed in a housing providing an inert gas atmosphere. Thermal stability is achieved by cooling the optical unit 200 and the chamber plate 300. The optical unit and/or the chamber plate may comprise channels for a cooling fluid for cooling the respective parts. The cooling fluid may be water. The cooling fluid may be provided by a chiller. The chiller may comprise a feed-back loop stabilizing the temperature of the cooling fluid. The mirror mounts of the optical unit may be cooled, for example by cooling channels near the mirror mounts or by cooling channels within the mirror mounts. Cooling may be achieved by flushing water through the cooling channels. The chamber plate 300 may also comprise cooling channels. Further, the window of the chamber 400 may be heated to avoid condensation. The crucible inside the chamber is heated with a heating wire directly in contact with the crucible achieving temperatures up to 550°C. The heat is dissipated via the gas port. Thus, heating of the window and in particular the seal of the window, for example an O-ring, is avoided. By providing a chamber 400 with a flat window, the dead volume is reduced and more diffusively reflected rays can be collected by the mirrors of the optical unit 200. The chambers 400 are mounted on the chamber plate 300 which may be moved by the rotary stroke actuator 500 by lifting and rotating the chamber plate 300, the chambers 400 can be placed into the beam path defined by the optical unit 200. In particular, the chamber, more specifically the sample in the chamber, may be placed in a common focus of the two ellipsoidal mirrors. The design of the base plate assembly 100 further increases stability and may comprise an adapter plate which allows to fit the assembly to a commercially available spectrometer. The assembly allows for a modular design, wherein parts of the assembly can be easily changed or replaced. Further, the assembly can be used in combination with different spectrometers.

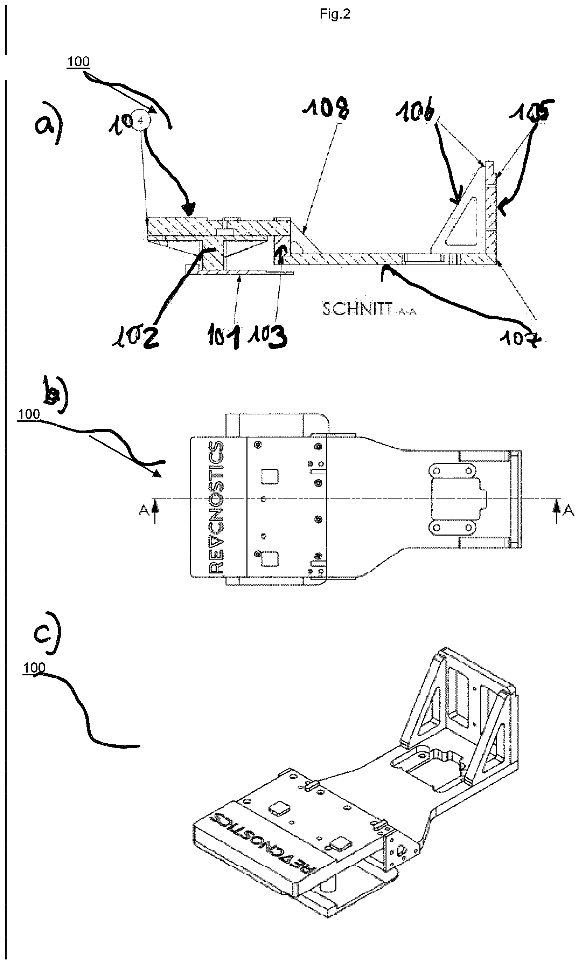

Fig. 2 shows the design of the base plate assembly 100. The base plate assembly may comprise a spectrometer adapter plate 101. The spectrometer adapter plate 101 may be optional. The assembly may be coupled to a conventional spectrometer by means of the spectrometer adapter plate. The base plate assembly comprises a bottom plate 107. The bottom plate 107 may be a cuboid or substantially a cuboid. A cuboid has two larger side areas adjacent and parallel to each other and two short side areas adjacent and parallel to each other and two long side areas adjacent and parallel to each other. The long and short side areas are perpendicular to the two larger side areas of the cuboid. The base plate assembly 100 further comprises a front plate 105. The front plate 105 may be a cuboid. The front plate 105 is placed at a first short side of the rectangular larger area of the bottom plate 107. The front plate 105 is perpendicular to the bottom plate 107. A connector plate 103 is located at the second short side of the larger area of the bottom plate 107. The connector plate 103 may be a cuboid. The connector plate 103 is perpendicular to the bottom plate 107 and parallel to the front plate 105. A front support angle 106 may connect the front plate 105 and the bottom plate 107. The front support angle 106 may be placed in the corner formed by the front plate 105 and the bottom plate 107. A back support angle 108 may connect the connector plate 103 and the bottom plate 107. The back support angle 108 may be placed in the corner formed by the front plate 105 and the bottom plate 107. The support angles 106, 108 stiffen the connection. There may be two front support angles 106. There may be two back support angles 108. Accordingly, a first short side area of connector plate 103 faces the larger area of the bottom plate 107 at a short side of the rectangular forming the larger area of the bottom plate 107 adjacent to the short side at which the front plate 105 is placed. The base plate assembly 100 comprises a top plate 104. The top plate 104 may be a cuboid. The top plate 104 may be parallel to the bottom plate 107. The connector plate 103 offsets the top plate 104 from the bottom plate 107, i.e. the top plate 104 is perpendicular to the connector plate and the connector plate offsets the top plate 104 from the bottom plate. The top plate 104 extends beyond the larger area of the bottom plate 107. In particular, the one short edge of the top plate 104 forms an edge or corner with an end of the connector plate 103. The top plate 104 extends away from the connector plate 103 in a direction parallel but away from the bottom plate 107. The rotary stroke actuator 500 may be connected to the bottom plate 107 and/or the front plate 105. The optical unit may be connected to the top plate 104. The top plate 104 may comprise respective grooves acting as receptacles for the optical unit 200. In particular, for the base mounts and the flat mirror mounts or respective adapter plates. The base plate assembly 100 may be out of Aluminum. The base plate assembly is more stable than previous designs. In particular, the base plate assembly is more thermally stable.

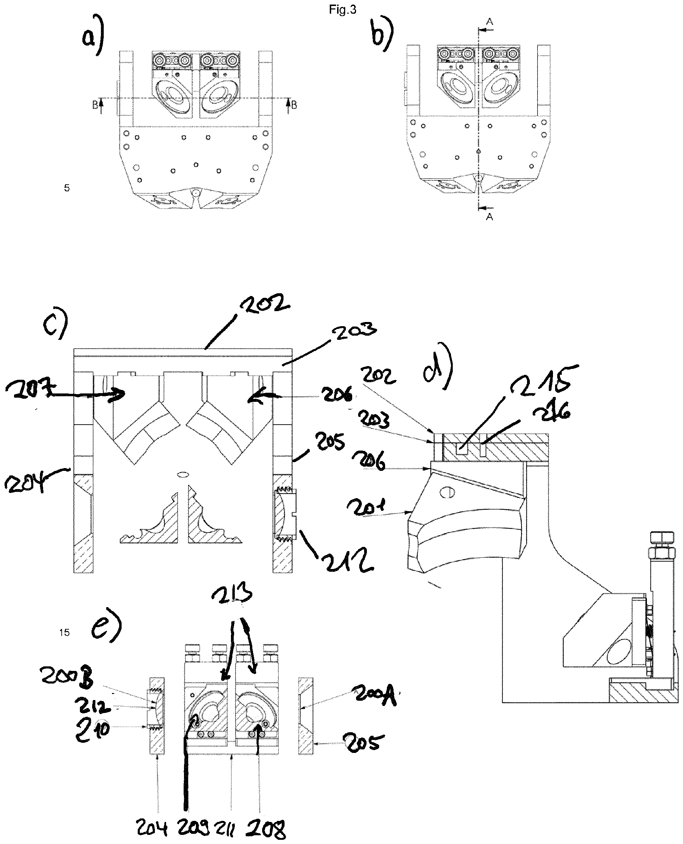

Fig. 3 shows the optical unit 200. Fig. 3 a) and b) show a view from the direction from the end of the top plate 104 of the base plate assembly 100 into the direction of the front plate 105, i.e. along the longitudinal direction X of the assembly.

Figs. 3 c), d), and e) are respective cross sections. Fig. 3 d) shows a cross section along the line A-A. Fig. 3 c) and e) show cross sections along the line B-B. Fig. 3c) shows a cross section though the optical unit 200 perpendicular to the longitudinal axis X of the assembly. Two ellipsoidal mirror mounts 206, 207 are shown, one entrance ellipsoidal mirror mount 207 and one exit ellipsoidal mirror mount 206. The ellipsoidal mirror mounts are connected to a cooling plate 203. The cooling plate 203 may be parallel to the top plate 104 of base plate assembly 100. The cooling plate 203 may be adjacent to the top plate 104. The cooling plate 203 may comprise a cooling channel 215 for a cooling fluid. The cooling plate 203 may be covered by a cover plate 202. The cooling channels 215 may be grooves formed in the cooling plate 203 which are sealed by the cover plate 202. The cover plate 202 may comprise ports 216 which form an inlet or outlet for the cooling channel 215 for the cooling plate 203. The cooling plate 203 and the cover plate 202 are connected to a left base mount 204 and a right base mount 205. The base mounts 204, 205 are perpendicular to the cooling plate 203. The base mounts 204, 205 are further connected to the top plate 104 of the base plate assembly. Thus, the base mounts 204, 205 connect the cooling plate 203 with the top plate 104. With respect to the top plate 104, the ellipsoidal mirrors mounts 206, 207 are hanging from the cooling plate 203 towards the top plate 104. The optical unit 200 further comprise two flat mirror mounts 208, 209, one entrance flat mirror mount 208 and one exit flat mirror mount 209. The flat mirror mounts may be connected to the top plate 104. The flat mirror mounts may be located between the top plate 104 and the ellipsoidal mirror mounts. The incident beam of a FTIR spectrometer may enter the assembly, which may be called a μ-DRIFTS (assembly), approximately from the side, i.e. perpendicular to the longitudinal axis X, but in a plane parallel to the top plate 104. The incident beam may further be reflected by the entrance flat mirror mounted on the entrance flat mirror mount 208 to the entrance ellipsoidal mirror mounted on the entrance ellipsoidal mirror mount 206 which focuses the light to the sample position. The focus of the spectrometer may coincide with the surface of the entrance flat mirror. The chamber plate 300 may hold one of the chambers 400 containing the sample to be studied at a position such that the sample is at the sample position, i.e. a common focus of the two ellipsoidal mirror mounts. The diffusively reflected light is collected by the exit ellipsoidal mirror mounted on the exit ellipsoidal mirror mount 207 to the exit flat mirror mounted on the exit flat mirror mount 209. The exit flat mirror guides the beam to a focusing lens 212 that bundles the rays further in order to ensure that the majority of the diffusively reflected rays are detected by the FTIR detector optics. The focusing lens 212 may be a $CaF_2$ lens. The mirrors and or the mirror mounts may be commercially available mirrors and/or mirror mounts. The lens 212 may be mounted in a threaded sleeve 210 allowing to adjust the focus optimizing the signal to noise ratio by focusing the beam onto the detector of a respective spectrometer. The flat mirror mounts 208, 209 may be connected to the top plate via a mirror mount plate 211. Both flat mirrors are placed in the mirror mounts (208 and 209) which may be connected to kinematic mirror mounts 213, for example commercially available MISUMI adjustable mirror mounts. By turning the adjustment knops at 13, the angle of the mirrors can be adjusted by +/-5° (tip-tilt).

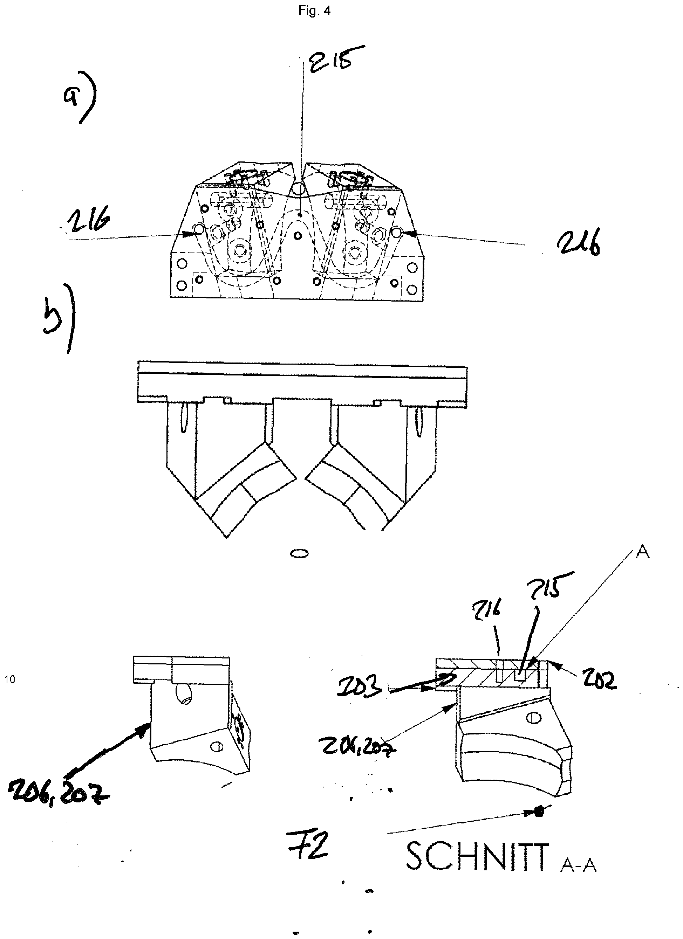

The ellipsoidal mirrors 201 are connected to the ellipsoidal mirror mounts 206, 207 which are connected to a cooling plate which contains a groove 215 for guiding cooling liquid which is connected to ports 216, as shown in fig. 4 a). Cooling of the cooling plate keeps the surface temperature of the ellipsoidal mirrors always at room temperature even if the chamber is set to 550°C. Figs. 4 b) and c) show additional cross sections through the optical unit 200 and the respective mirror mounts.

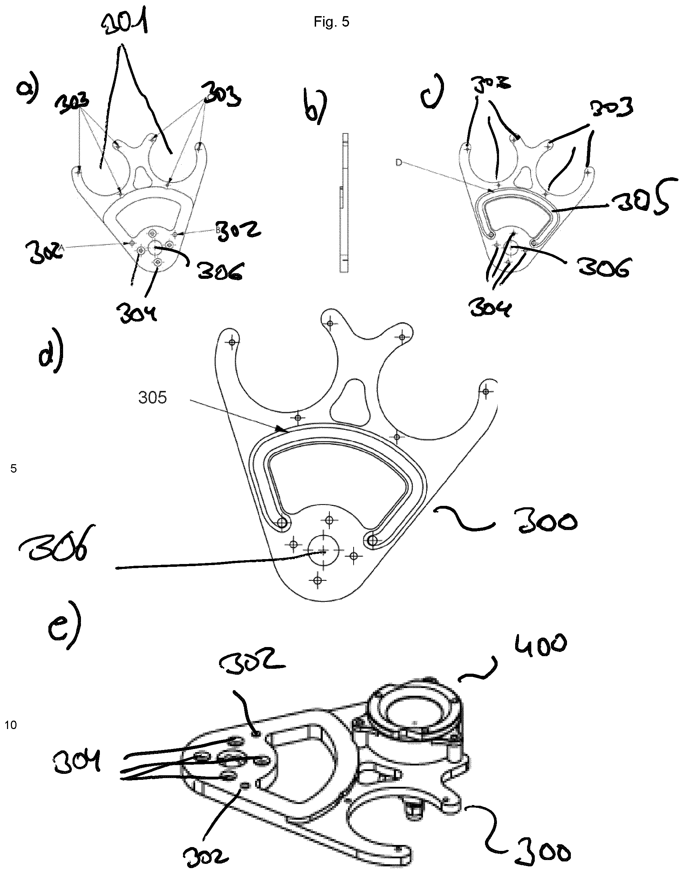

Fig. 5 shows the chamber plate 300. The chamber plate 300 comprises two cut-outs or recesses 301 configured to mount the spectroscopy chambers containing samples, for example a catalyst and/or reference. The chamber plate 300 comprises two ports 302 for cooling fluid which flows through the groove 305. The chamber plate comprises mounts 303 to mount the spectroscopy chambers 400.

The groove 305 may be sealed with an Aluminum sheet metal glued to the underside of the chamber plate 3000, in particular to the area around the groove. The aluminum sheet metal may be glued onto the chamber plate 300 with epoxy adhesive. The groove 305 may alternatively be a cooling channel inside the chamber plate 300. The chamber plate 300 is connected to a rotary stroke actuator 500 which rotates and lifts the chamber plate in order to move the mounted chambers into the beam path of the optical unit 200.

The chamber plate may be actively water cooled by providing cooling fluid through the groove 305. The ports 302 may acts as inlet and outlet ports for the cooling fluid. The mechanics of the rotary stroke actuator 500 are therefore protected against high temperatures. In particular, because the heat from the chamber is dissipated before the heat can reach the rotary stroke actuator. The chamber plate 300 may be out of Aluminum which has a high thermal conductivity, thereby improving the cooling efficiency.

The chambers 400 may be mounted by three spacer sleeves on the mounts 303. Using spacer sleeves to mount the chambers reduces the contact between the chamber and the chamber plate. Therefore, heat dissipation from the chamber through the chamber plate 300 is reduced.

Fig. 5 a) shows a top view of the chamber plate. Fig. 5 b) shows a side view of the chamber plate. Fig. 5 c) and d) show a bottom view of the chamber plate. Fig. 5 c) and d) show the groove 305 at the bottom side of the chamber plate 300. The groove may be sealed by means of a sheet metal, for example an aluminum sheet metal, which may be glued to the chamber plate using, for example, an epoxy adhesive.

Fig. 5 e) shows a perspective view of the chamber plate having one chamber mounted in one of the cut-outs or recesses 301.

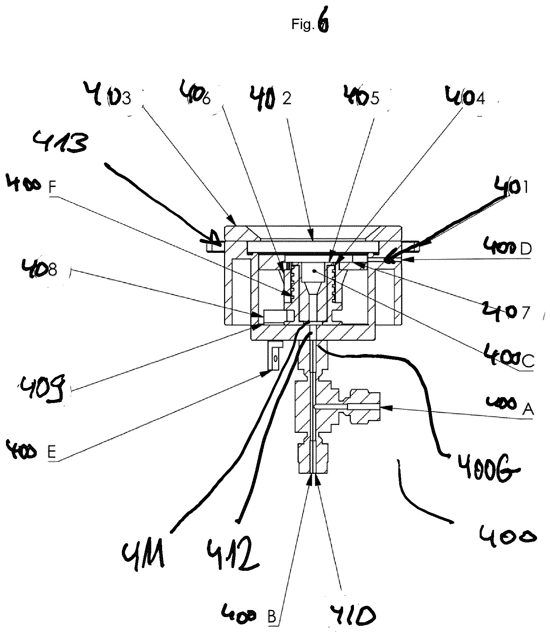

Fig. 6 shows a spectroscopy chamber 400. The spectroscopy chamber 400 can be mounted in each of the cut-outs of the chamber plate. The chamber 400 comprises a protrusion 413 that acts as a limit stop to hold the chamber in the cut-out 301. By means of a rotary stroke actuator that moves the chamber plate 300, the mounted spectroscopy chamber 400 can be placed in the beam path of the optical unit 200, in particular a sample in the chamber can be placed at the common focus of the two ellipsoid mirrors of the optical unit 200.

The chamber 400 comprises a casing 401. The chamber 400 may further comprise a sample crucible or crucible 405. The chamber further comprises a heating element 404. The casing 401, for example, may be out of 316L stainless steel. The casing may further comprise a port acting as gas inlet or outlet 400D and a first port for at least one electrical connection 408E, for example for the heating wire 400F and may also comprise a second port for at least one electrical connection 409, 400E, for example for the heating wire 400F which is wrapped around the heating element 404. Heating element 404 covers the outside of the crucible 405. Thus, the heating wire may use the first port 408, 400E as input electrical connection and the second port 409, 400E as output for the electrical connection of the heating wire. The heating element may comprise a helical groove, wherein the heating wire 400F is wrapped around the heating element in the helical groove. The heating wire 400F may be a stainless steel heating wire. The crucible 405 and the heating element 404 may be out of machineable AIN ceramic with a high thermal conductivity (for example SHAPAL). SHAPAL ceramic shows a high thermal conductivity and is beneficial for homogeneous heat distribution. A thermal shield 406 around heating wire 400F and heating element 404 reduces heat loss and uncontrolled IR radiation into the surroundings. The thermal shield may be out of machineable glass ceramic from mica/borosilicate glass with low thermal conductivity (for example MACOR). The crucible 405, the heating element 404 and the thermal shield 406 are inside the volume defined by the casing 401 and the window 402.

The chamber 400 is sealed by a flat window 402. For example a $CaF_2$ window. A FFKM (Perfluoro rubber) O-ring is placed between the casing 401 and the window 402. The O-ring may be placed into a groove. The groove may be formed by the casing 401. A lid 403 presses the window onto the O-ring to seal the chamber 400. The lid 403 may be out of Si3N4 and AIN ceramic with implemented heat wires to actively heat the window 402 and the lid 403. This prevents sample condensation. Due to the well-balanced heat management by different kind of ceramics and design of the chamber sample condensation inside the whole cell is avoided.

The chamber may further comprise a spacer 407. The spacer 407 reduces the dead volume of the chamber and is out of thermal insulating Macor ceramic to further decrease heat dissipation. The spacer 407 shields the seal of the window 402.

The casing may comprise a third port 412 to connect the crucible 405 to the outside, for example to provide gas flow or electrical connections for a thermocouple placed within the crucible 405. To that end, the sample crucible 405 is provided with a drilled hole 411. The drilled hole 411 is connected to the third port 412 of the casing 401. The third port 412 allows to connect a thermocouple placed inside the chamber, i.e. the leads of the thermocouple may run through the third port. The thermocouple may be placed inside the crucible, in particular inside the sample in the crucible, because the thermocouple and/or the respective lead may run through the third port 412 and the drilled hole 411 of the crucible 405 towards the inside of the crucible. Therefore, the temperature may be measured inside the sample 400C which is placed in the sample crucible 405.

At the bottom of the casing 401, in particular at the third port of the casing, a T-piece 410 may be mounted, for example a 1/16" T-piece 410. The T-piece 410 may comprise an additional first gas port 400A for inlet or outlet and a second port 400B for a thermocouple and a third port 400G connected to the volume inside the chamber 400 via the third port 412 of the casing 401.

The new chamber design allows for operating conditions between 50°C and 550°C. By providing a crucible 405 in the form of a small pillar that is heated by a heating element 404 wrapped around the crucible 405, heat dissipation is minimized and guided towards the gas ports. The flat window 402 reduces dead volume. Further, the flat window allows to collect more diffusely reflected radiation by the optical unit 200, since the numerical aperture (NA) is optimized. A wire wrapped around the heating element 404, in particular in a helical groove, levels off the temperature gradient. The design allows to use an O-ring, for example a FFKM or VITON O-ring and still allows for measurement temperatures up to 550°C. In particular, the particular choice of heat conducting and non-heat conducting ceramics avoids high temperatures at the O-ring. In addition, providing an cooled chamber plate holding the chambers in particularly advantageous as heat can be dissipated via the chamber plate. This allows to keep the temperature of the O-ring below a temperature that may adversely affect the O-rings performance. In particular, the temperature at the O-ring remains below such critical temperature even if the sample inside the chamber is heated up to 550°C.

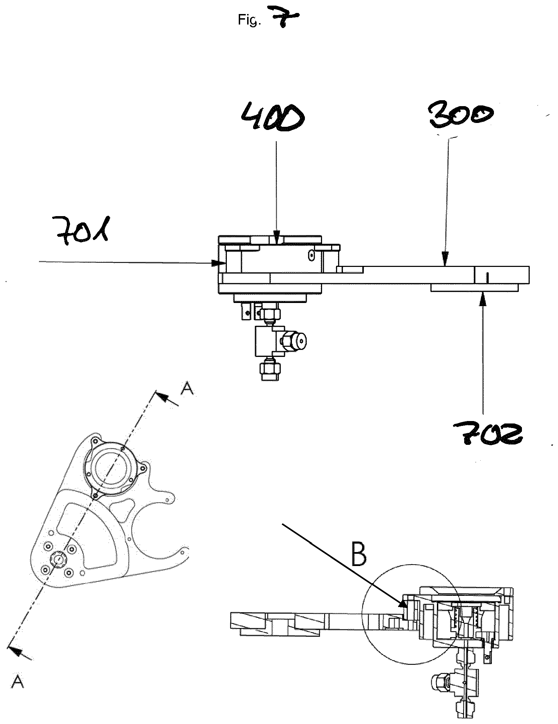

Fig. 7 shows a chamber 400 mounted on the chamber plate 300. The chamber 400 is mounted to the chamber plate 300 via spacer sleeves 701, for example via three spacer sleeves 701. The spacer sleeves may be out of Aluminum. The chamber 400 may be mounted to the chamber plate 300 via the spacer sleeves by means of the mounts 303. The dimensions of the spacer sleeve 701 are such that a controlled amount of heat is removed from the chamber 400 by the active water cooling of the chamber plate 300. The spacer sleeve 701 offsets the chamber from the chamber plate 300, i.e. the protrusion 413 of the chamber which extends above the spacer sleeves 701 is only in indirect contact with the chamber plate 300 via the spacer sleeves. The amount of heat is controlled by choosing the offset. In particular, the offset controls the distance of the heat source, for example the distance of the heating element 404 and the crucible 405 to the chamber plate 300. Further, the length of the indirect path via the spacer sleeves 701 is controlled by the length of the spacer sleeves 701. Together with the special design of the chamber which encapsulates the heat at the sample, polymer O-Rings can be used to seal the chamber (e.g. FFKM).

In summary: thermal decoupling of the chamber 400 and actively cooling the chamber plate allows for a thermally stable assembly. The assembly design allows for less heat dissipation of the chamber casing 401 to the chamber plate 300. The chamber 400 is mounted to the chamber plate by three thin-walled Al sleeves and a M3 screw connected to mounts 303 yielding a small contact surface. Thus, excessive heat transfer to the chamber plate 300 is avoided.

The chamber is sealed by a lid 403 out of ceramic with implemented heating wires (Bach RC). The lid 403 can be heated up to 250°C. The lid is a ceramic heating element. The heating conductors or wires are sintered directly into the lid. For example, the company Bach RC develops and distributes this type of all-ceramic heating element.

The heating element 404 is mechanically connected only at the bottom to the chamber casing 401. Accordingly, heat is dissipating towards the gas connector at the bottom of the chamber 400, for example a T-piece providing the connection for gas and a thermocouple.

The interplay between the active heating from above by the lid 403 and the heating power of the heating element 404 at the sample cause the casing 401 (plus gas ports) of the chamber 400 to heat up to a temperature where sample gas condensation is prevented. The assembly can be pressurized at least up to 10 bar. This pressure refers to the internal gas phase pressure of the chamber.

This chamber 400 / chamber plate 300 assembly is connected to the rotary stroke actuator 500 by the adapter mount 702.

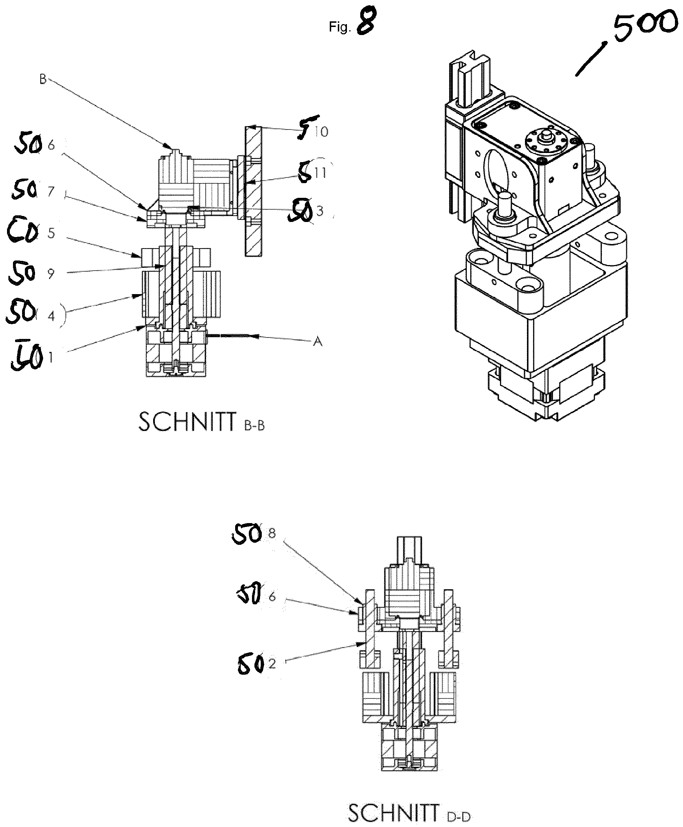

Fig. 8 shows the rotary stroke actuator 500 lifting and rotating the chamber plate 300.

The rotary stroke actuator 500 comprises a servo motor 503. The servo motor 503 may be connected to the top of a stroke actuator 501 via a brass shaft 509. A servo motor adapter 506 and the servo motor mount 507 connect the brass shaft 509 with the servo motor 503. The rotary stroke actuator 500 may further comprise two stainless steel precision shafts 502 which are guided by linear ball bearings 508 and mounted to precision shaft mounts 505 to prevent radial movement of the stroke actuator 501.

The rotary stroke actuator 500 may be connected to the base plate assembly 100 by a spacer 504. The spacer 504 may be screwed onto the bottom plate 107 of the base plate assembly. Accordingly, a hole may be provided in the bottom plate 107 through which the part of the rotary stroke actuator below the plane labelled A is fitted. The part of the rotary stroke actuator that extends below the bottom plate comprises the stepper motor.

The rotary stroke actuator 500 may further be connected via a sledge 511 to a rail 510 connecting the rotary stroke actuator to the front plate of the base plate assembly. In particular the rail 510 may be connected to the front plate 105. The rail 510 may be perpendicular to the bottom plate 107 and the longitudinal axis X, respectively. The rail may be parallel to the extension plane of the front plate 105. The stepper motor drives a sliding rail which moves the sledge along the rail. Rotating the stepper motor leads to the sliding rail attached to the sledge moving along the rail 510. The sledge may not be directly attached to the sliding rail. The sliding rail may be attached to the upper part of the rotary stroke actuator 500 comprising the servo motor 503. Thus, the sliding rail may be connected to the sledge vie the upper housing comprising the servo motor 503. The stepper motor may arranged under the bottom plate 107 in vertical direction and may be configured to move the upper part of the rotary stroke actuator comprising the servo motor. The sledge may force fit to the rail 510.

The design of the assembly in connection with the rotary stroke actuator allows for fast reproducible and accurate measurements at high temperatures.

By lifting and rotating the chamber plate 300, the rotary stroke actuator 500 allows for precise and reproducible interchange of the chambers in the beam path. In particular, each chamber can be moved to a position so that the sample inside the chamber coincides the common focus of the two ellipsoidal mirrors. The chamber plate 300 is not only attached to the high precision rotary stroke actuator, but additionally to a high precision linear stage, which comprises the rail 510 and the sliding rail 511, and two precision shafts 502 which allow up and down as well as lateral movements at utmost accuracy and mechanical stability. Connecting the rotary stroke actuator 500 to the bottom plate 107 via the spacer 504 and also via the sledge 511 and the rail 510 to the front plate 105 further improves stability. Therefore, tilting of the chamber plate 300/rotary stroke actuator 500 towards the chamber (due to the leverage exerted on the rotary stage actuator via the chamber plate 300) is prevented, in particular by using a precision linear stage which connects the rotary stroke actuator to the, so called, μ-DRIFTS base plate assembly 100.

The suggested design allows all actuators and movement devices to be placed outside of heated area. Further, water cooling of the ellipsoidal mirrors prevents changes in beam path at high temperatures. In combination with the rotary stroke actuator fast, reproducible and accurate measurement can be performed.

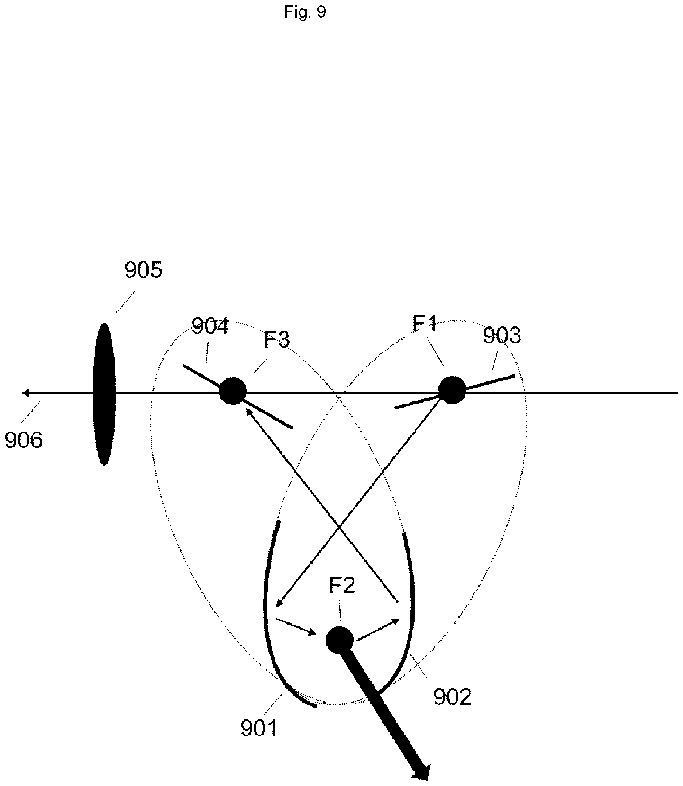

Fig. 9 is a schematic representation of the optical unit 200. Off-axis ellipsoidal mirrors 901, 902 are used as ellipsoidal mirrors. These mirrors 901, 902 have two focal points F1, F3 and F2. In case light is guided through F2 to the surface of the mirror 901, the ellipsoidal mirror will reflect this light und will focus it to F1 and vice versa. In case light is guided through F2 to the surface of the mirror 902, the ellipsoidal mirror will reflect this light und will focus it to F3 and vice versa.

The optical unit 200 uses two ellipsoidal mirrors 901, 902. They are aligned such that they have one common focal point, depicted as F2 in the representation of fig. 9, where the sample is located. The other focal points F1 and F3 are separated.

If light is guided through F1 to ellipsoidal mirror 901, the light is reflected and will be focused to F2, where the sample is placed. The diffusively reflected light is collected by ellipsoidal mirror 902 and is focused to F3. Thus, the specular reflectance is guided by ellipsoidal mirror 902.

Flat mirrors 903, 904 are placed at a specific angle at F1 and F3. If the incident light from the spectrometer, for example a FTIR spectrometer, is guided to F1, it will be reflected to the ellipsoidal mirror 901 and from that it is focused to the sample surface with a focal diameter of approx. 6 mm. The focal point of the spectrometer may coincide with F1.

Specular reflected light is guided away, beneath ellipsoidal mirror 902. Diffusively reflected rays are collected by ellipsoidal mirror 902 and focused to F3 where the infra-red light is guided towards the detector inside the spectrometer.

An additional lens 905 placed in the beam path after focal point F3 further re-focusses the light to achieve higher intensities at the detector.

This optical design, in particular the additional lens increases the signal by a factor of four.

By changing the orientation of the adjustable flat mirrors 208, 209, 903, 904 ($\theta_X$ und $\theta_Y$ axis, +/- 5°), the angle of incident light to the sample can be changed and calibration for high intensity can be performed.

Due to the alignment of the focal points of the ellipsoidal mirrors 206, 207, 901, 902, while changing the orientation, the IR light remains focused to the sample and the specular reflectance is not entering the detector. Therefore, while performing calibration for highest intensity it is not possible to run accidently into a mirror position where specular reflectance is collected or the sample is not adequately focused.

The optical axis 906 runs through both flat mirrors. Therefore, after the optical unit 200 is calibrated, the optical unit 200 may be placed into the sample compartment of any spectrometer such that the optical axis of the spectrometer crosses focal points F1 and F2 and the position of the spectrometers focal point accordingly coincides with F1.

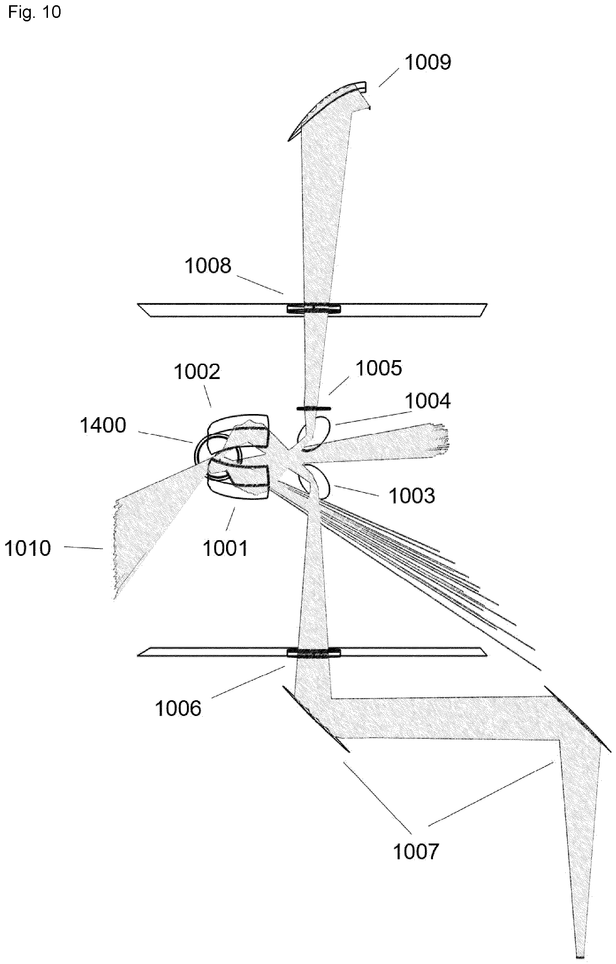

Fig. 10 shows a simulation of the beam path. The infrared light beam is aligned by guiding optics 1007 with the optical axis, which is defined by the focal points F1 and F3, which coincide with the flat mirrors 1003 and 1004. The light is directed towards the first flat mirror 1003 thought a first aperture 1006. The light directed onto the first flat mirror 1003 is reflected onto the ellipsoidal mirror 1002 and focused in focal point F2 which coincides with the position of the sample in the chamber 1400. The diffuse reflectance is collected by ellipsoidal mirror 1001 and directed to focal point F3. Flat mirror 1004 directs the light towards aperture 1008. A focusing lens is placed between the aperture 1008 and the flat mirror 1004. This allows to collect the light and avoids losses at that aperture or because the cross section area of the beam at the detector extends beyond the detection area of the detector. After exiting the aperture 1008 the light is directed onto the detection area of the detector.

The simulation shows that the specular reflectance 1010 is not collected by the optical system and accordingly not directed onto the detector. On the contrary the specular reflectance exits the optical path between the two ellipsoidal mirrors 1001 and 1002.

Thus, the described assembly allows for versatile use with different spectrometers.

The described optical setup used two mirrors less than conventional setups.

According to a further aspect, the invention is directed towards a method for determining a surface concentration of an adsorbate adsorbed from a sample gas onto a solid catalyst, the method comprising each of the following steps (i) to (v):

(i.) a reference gas measuring step 1101 comprising

a. measuring at one or more temperatures, T, an intensity of infrared radiation diffusely reflected by a catalyst-containing material, $I_{cat,refgas}(T)$, in a first spectroscopic chamber 400 of an assembly according to an assembly according to the invention, which spectroscopic chamber 400 contains a reference gas 1101';

b. measuring at the one or more temperatures T an intensity of infrared radiation diffusely reflected by a solid inert reference material, $I_{refmat,refgas}(T)$, in a second spectroscopic chamber 400 of the assembly containing the reference gas 1101";

(ii.) determining for the one or more temperatures T a background-corrected reflectance of the catalyst with reference gas, $R_\infty(T)$, and $R_\infty(T) = \dfrac{I_{cat,refgas}(T)}{I_{refmat,refgas}(T)}$ 1102 ;

(iii.) a sample gas measuring step 1103 comprising

a. measuring at a set temperature, T', an intensity of infrared radiation diffusely reflected by the catalyst-containing material in the first spectroscopic chamber 400 containing the sample gas comprising one or more adsorbates, $I_{cat,samgas}(T',sample)$ 1103';

b. measuring at the set temperature T' an intensity of infrared radiation diffusely reflected by the solid inert reference material in the second spectroscopic chamber 400 containing the sample gas comprising one or more gaseous adsorbates, $I_{refmat,samgas}(T',sample)$ 1103";

(iv.) determining for the set temperature T' a background-corrected reflectance of the catalyst material with adsorbed adsorbate and sample gas, R(T',sample), and $R(T', sample) = \dfrac{I_{cat,samgas}(T',sample)}{I_{refmat,samgas}(T',sample)}$ 1104 ;

(v.) isolating, for T=T', an adsorbate signal according to Matyshak-Krylov, MK(T'), and

$$MK(T') = \frac{R_\infty(T') - R(T', \text{sample})}{R_\infty(T')} \left(\frac{1}{R(T', \text{sample})} - R_\infty(T')\right) \ 1105;$$

the method comprising repeating steps (iii) to (v) with at least one further set temperature T' and sample gas.

The method is particularly suitable for Diffuse Reflectance Infrared Fourier Transform Spectroscopy (DRIFTS), a spectroscopic method widely used in heterogeneous catalysis.

The catalyst-containing material can be a sample of the pure catalyst, e.g. for standard operando DRIFTS, or a highly diluted catalyst sample, e.g. for iso-potential DRIFTS. The solid inert reference material can be e.g. the diluent, the catalyst support or a white standard.

The function of the reference gas is to put the catalyst in a defined chemical reference state (e.g. $H_2$ to reduce metal oxide to metal, $O_2$ to oxidize metal to metal oxide, $H_2O$ vapor to hydroxylate an oxide surface, $H_2S$ to sulfidize a metal surface etc.). The reference gas can be IR-active or IR-inactive.

IR radiation is not only absorbed by the adsorbates on the catalyst surface, but also by the bulk material of the catalyst itself. For example, for a transition metal oxide that easily changes the oxidation state, e.g. molybdenum oxide ($MoO_x$) and which is used to do a selective oxidation of a hydrocarbon. $MoO_3$ may be present at the beginning of the catalyst bed where there is a lot of oxygen in the gas phase and $MoO_2$ can be found further downstream in the catalyst bed where the oxygen is already consumed.

During a measurement along a reactor, the oxidation state of the catalyst may change continuously and corresponding absorption bands appear in the spectrum, which change along the catalyst bed. This cannot be prevented but instead made use of, as the changes in the bulk catalyst along the bed can be studied. These absorption bands can be positive or negative, depending on whether the catalyst in the reactor or the catalyst under reference conditions absorbs more IR-radiation. To be able to interpret this properly, it is important to have a defined reference state of the catalyst material. In the MoOs example, for example $O_2$ could be taken as the reference gas. Upon fully oxidising the catalyst to MoOs in the reference measurement, MoOs would be the reference point. One could also take $H_2$ and reduce the catalyst fully to $MoO_2$, in which case $MoO_2$ would be the reference point. In both cases, using $O_2$ or $H_2$, the reference gas is IR-inactive,

However, it is also conceivable to use an IR-active reference gas. When, for example, zeolites are studied as a catalyst, many Broenstedt centres (OH groups) are present on the surface. In case the catalyst should be completely hydroxylated in the reference state, for example, then water vapour can be used as the reference gas, which is IR-active. Similarly, in case of sulphide catalysts for desulphurisation, $H_2S$ can be used as a reference gas, which is also IR-active.

The sample gas can comprise one or more gaseous adsorbates that interact with the solid catalyst-containing material. Depending on the properties of the catalyst-containing material the gaseous adsorbates will interact with the surface of the solid material, e.g. form weak bonds, change the oxidation state of the catalyst or undergo a chemical reaction. A diluted catalyst may be preferred to minimize the chemical conversion of adsorbate.

The two measuring steps (i). a. 1101' and (i). b. 1101" can be performed in any order. To change from measuring the catalyst to the reference material or vice versa in an assembly according to the invention, the chamber plate 300 is lifted and rotated at utmost accuracy and mechanical stability by the rotary stroke actuator 500, the high precision linear stage and precision shafts. That way, the focal point F2 of the incident light illuminates precisely the same spot on the catalyst or on the reference material throughout the steps (i). a. 1101' and (iii). a. 1103', as well as (i). b. 1101" and (iii). b. 1103".

The two measuring steps (i). a 1101' and (i). b. 1101" allow to determine the IR spectrum of the catalyst relative to the reference material free of optical influences from the optical components of the assembly and IR absorption from the reference gas and the atmosphere in the pathway of the IR radiation, e.g. within the rest of the assembly. The result is the background-corrected reflection $R_\infty(T)$ of the catalyst with the reference gas.

Similarly, the two measuring steps (iii). a 1103' and (iii). b. 1103" can be performed in any order. These steps allow to determine the IR spectrum of the catalyst free of background related to the sample gas $R(T', \text{sample})$.

The steps (iii) to (v) can be repeated for multiple combinations of sample gas and set temperatures, e.g. along the catalyst bed of a reactor. The advantage of this method is that the intensity ($I_{cat}$) of infrared radiation diffusely reflected by the reference material and the catalyst in the reference gas do not have to be remeasured. An additional, e.g. third spectroscopic chamber is not required, since the assembly according to the invention provides conditions and controls stable and accurate enough to only require measurements with reference gas at the beginning of the method.

## Claims

1. Assembly for studying a sample by means of electromagnetic radiation comprising:

    a base plate assembly (100);

an optical unit (200) comprising a cooling plate (203), two base mounts (204, 205), an entrance flat mirror, an entrance ellipsoidal mirror, an exit ellipsoidal mirror and an exit flat mirror and a focussing lens configured to bundle the rays received from the exit flat mirror (209), wherein the entrance and exit ellipsoidal mirrors are connected to ellipsoidal mirror mounts (206, 207) which are connected to the cooling plate (203), wherein the cooling plate (203) contains a cooling channel (200A) and two ports (200B, 200C), wherein the first port (200B) is connected to an inlet of the cooling channel and the second port (200C) is connected to an outlet of the cooling channel;

a chamber plate (300) having two spectroscopy chambers (400), wherein the spectroscopy chambers (400) are fastened on the chamber plate (300), wherein each spectroscopy chamber (400) comprises

a casing (401) comprising a gas port (400D), a first port (408, 400E) for an electrical connection, a second port (409, 400E) for an electrical connection, a crucible (405), a heating element (404), and a third port (412); a window (402), wherein the window seals the casing (401) gas tight, wherein the casing (401) and the window (402) define a volume, wherein the crucible (405) and the heating element (404) are within said volume, the sample crucible (405) is provided with a drilled hole (411) connected to the third port (412) of the casing (401); and

wherein the chamber plate (300) is connected to the base plate assembly (100) via a rotary stroke actuator (500), wherein the rotary stroke actuator is configured to move chambers (400) horizontally and rotate the chambers vertically into the beam path under the optical unit (200), wherein the chamber plate (300) comprises a cooling channel (305) and two ports (302), wherein the first port (302) is connected to an inlet of the cooling channel (305) and the second port (302) is connected to an outlet of the cooling channel.

2. Assembly according to claim 1, wherein the rotary stroke actuator (500) comprises a servo motor (503), which is connected to the top of a stroke actuator (500), wherein the stroke actuator (500) is connected to the base plate by a spacer (504) and wherein the servo motor (503) is connected to a rail (510) via a sliding rail (511).

3. Assembly according to any of the preceding claims, wherein the base plate assembly (100) comprises a front plate (105), a bottom plate (107), a top plate (104) a plate support (102) and a spectrometer adapter plate (101).

4. Assembly according to any of the preceding claims, wherein the entry and exit flat mirrors are mounted on mirror mounts (208, 209), wherein the mirror mounts (208, 209) for the entry and exit flat mirrors are connected to the base plate assembly (100), in particular to the top plate (104), and in particular wherein the mirror mounts (208, 209) are configured to mount the mirrors on kinematic mounts (213), wherein the kinematic mirror mount is connected to the top plate (104) via an adapter plate (211).

5. Assembly according to any of the preceding claims, wherein the base mounts (204, 205) are connected to the base plate assembly (100), in particular to the top plate (104) of the base plate assembly (100) and wherein the base mounts (204, 205) are connected to the cooling plate (203), wherein the cooling plate (203) is parallel to the top plate (104) of the base plate assembly.

6. Assembly according to any of the preceding claims, wherein the chamber plate (300) is connected to the rotary stroke actuator (500) via a receptacle (B), wherein the receptacle is an adapter mount.

7. Assembly according to any of the preceding claims, wherein a wire (400F) is wrapped around the heating element (404), wherein the heating element (404) and the crucible (405) consists of glass ceramic, wherein the heating element (404) comprises a helical groove, wherein the heating wire (400F) is wrapped around the heating element in the helical groove, in particular wherein the heating wire (400F) is a stainless steel heating wire.

8. Assembly according to any of the preceding claims, wherein the heating element is covered by a heat shield (406) from mica/borosilicate glass ceramic with a low thermal conductivity coefficient

9. Assembly according to any of the preceding claims, wherein the window (402) is a $CaF_2$ window, wherein the casing (401) comprises a groove into which a O-ring is placed and wherein a lid (403) presses the window (402) against the O-ring, in particular wherein the lid (403) is out of $Si_3N_4$ and AIN ceramic, wherein the lid (403) comprises heating wires.

10. Assembly according to any of the preceding claims, wherein the chamber plate (300) comprises two recesses (301), wherein each recess is configured to mount one of the chambers (400).

**11.** Assembly according to any of the preceding claims, wherein the chamber plate (300) further comprises mounts (303) for spacer sleeves, in particular wherein the spectroscopy chambers (400) are mounted by means of spacer sleeves out of Al.

**12.** Assembly according to any of the preceding claims, wherein the chamber (400) further comprises a thermocouple, in particular wherein the thermocouple extends through the third port of the casing (401).

**13.** Assembly according to any of the preceding claims, wherein the chamber further comprises a T-piece at the bottom of the casing, wherein the T-piece comprises a first gas port (400A) and a second thermocouple port and a third port (400G) connected to the volume inside the casing (401) via the third port (412) of the casing (401).

**14.** Measuring cell for iso-potential drift spectroscopy comprising the optical assembly according to any of the preceding claims.

**15.** A method for determining a surface concentration of an adsorbate adsorbed from a sample gas onto a solid catalyst, the method comprising each of the following steps (i) to (v):

> (i.) a reference gas measuring step (1101) comprising:
>
>> a. measuring at one or more temperatures, T, an intensity of infrared radiation diffusely reflected by a catalyst-containing material, $I_{cat,refgas}(T)$, in a first spectroscopic chamber (400) of an assembly according to any of claims 1 to 13, which spectroscopic chamber (400) contains a reference gas (1011');
>> b. measuring at the one or more temperatures T an intensity of infrared radiation diffusely reflected by a solid inert reference material, $I_{refmat,refgas}(T)$, in a second spectroscopic chamber (400) of the assembly containing the reference gas (1011");
>
> (ii.) determining for the one or more temperatures T a background-corrected reflectance of the catalyst with reference gas, $R_\infty(T)$, and $R_\infty(T) = \dfrac{I_{cat,refgas}(T)}{I_{refmat,refgas}(T)}$ (1102);
> (iii.) a sample gas measuring step (1103) comprising
>
>> a. measuring at a set temperature, T', an intensity of infrared radiation diffusely reflected by the catalyst-containing material in the first spectroscopic chamber (400) containing the sample gas comprising one or more adsorbates, $I_{cat,samgas}(T',sample)$ (1103');
>> b. measuring at the set temperature T' an intensity of infrared radiation diffusely reflected by the solid inert reference material in the second spectroscopic chamber (400) containing the sample gas comprising one or more gaseous adsorbates, $I_{refmat,samgas}(T',sample)$ (1103");
>
> (iv.) determining for the set temperature T' a background-corrected reflectance of the catalyst material with adsorbed adsorbate and sample gas, R(T',sample), and
>
> $$R(T', sample) = \frac{I_{cat,samgas}(T',sample)}{I_{refmat,samgas}(T',sample)} \ (1104)_;$$
>
> (v.) isolating, for T=T', an adsorbate signal according to Matyshak-Krylov , MK(T'), and
>
> $$MK(T') = \frac{R_\infty(T') - R(T',sample)}{R_\infty(T')} \left( \frac{1}{R(T',sample)} - R_\infty(T') \right) \ (1105);$$

the method comprising repeating steps (iii.) to (v.) with at least one further set temperature T' and sample gas.

Fig.1

Fig.2

a)

100

104

108   106   105

102   101 103

SCHNITT A-A

107

b)

100

REVCNOSTICS

A ←   → A

c)

100

REVCNOSTICS

Fig.3

a)

b)

c)

202
203
207
206
204
205
212

d)
202
203
206
201
215
216

e)
213
200B
212
210
204 209 211 208
200A
205

Fig. 4

a)

215

216          216

b)

A

216   215

203            202

206,207

206,207

72   SCHNITT A-A

Fig. 5

a)

201

303    303

302
302    302
306
304

b)

c)

302    303

305
306
304

d)

305

306

300

e)

302

400

304

302

300

Fig. 6

Fig. 7

400

300

701

702

A

A

B

Fig. 8

500

B

506

507

CO 5

509

504

501

510

511

503

SCHNITT B-B

A

508

506

502

SCHNITT D-D

Fig. 9

Fig. 10

Fig. 11

1101'

1101''

1101

1102

1103'

1103''

1103

1104

1105

Europäisches
Patentamt
European
Patent Office
Office européen
des brevets

# EUROPEAN SEARCH REPORT

**Application Number**

EP 24 16 3074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 279 902 A1 (REACNOSTICS GMBH [DE]) 22 November 2023 (2023-11-22) * the whole document * | 1-15 | INV. G01N21/03 G01N21/3563 G01N31/10 |
| Y | CN 203 811 526 U (JINAN DING SHUN MEDICAL DEVICES CO LTD) 3 September 2014 (2014-09-03) * figures 1, 2 * * claim 4 * | 1-15 | G01J3/02 B01J8/00 |
| A | BRAVO-SUAREZ J J ET AL: "Design characteristics of in situ and operando ultraviolet-visible and vibrational spectroscopic reaction cells for heterogeneous catalysis", CATALYSIS REVIEWS: SCIENCE AND ENGINEERING, MARCEL DEKKER INC. NEW YORK, US, vol. 59, no. 4, 2 October 2017 (2017-10-02), pages 295-445, XP009539694, ISSN: 0161-4940, DOI: 10.1080/01614940.2017.1360071 * 6.3 Mirror optics accessories; page 369 - page 389 * | 1-15 | ADD. G01N21/15 G01N21/35 G01N21/47 |
| A,D | M. MILOSEVIC ET AL: "A REVIEW OF FT-IR DIFFUSE REFLECTION SAMPLING CONSIDERATIONS", APPLIED SPECTROSCOPY REVIEWS., vol. 37, no. 4, 12 January 2002 (2002-01-12), pages 347-364, XP055651485, US ISSN: 0570-4928, DOI: 10.1081/ASR-120016081 * the whole document * | 1-15 | |

**TECHNICAL FIELDS SEARCHED (IPC)**

G01N

The present search report has been drawn up for all claims

| Place of search | Date of completion of the search | Examiner |
|---|---|---|
| Munich | 30 July 2024 | Sauerer, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3074

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2024

| Patent document cited in search report | | Publication date | Patent family member(s) | | Publication date |
|---|---|---|---|---|---|
| EP 4279902 | A1 | 22-11-2023 | EP | 4279902 A1 | 22-11-2023 |
|  |  |  | US | 2023375479 A1 | 23-11-2023 |
| CN 203811526 | U | 03-09-2014 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021078817 A1
- DE 19910291 A1
- WO 2021078817 A

**Non-patent literature cited in the description**

- **E. H. KORTE**. Analytiker-Taschenbuch. Springer-Verlag, 1990, vol. 9, 91-123
- *Appl. Spectrosc. Rev.*, 2002, vol. 37, 347-364